# EUROPEAN PATENT APPLICATION

(11) **EP 3 989 411 A1**
(43) Date of publication of application: **27.04.2022**
(21) Application number: 20846104.6
(22) Date of filing: 29.07.2020
(51) Int. Cl.: H02K 5/06, H02K 5/20, H02K 9/19, H02K 15/14

(54) **DYNAMO-ELECTRIC MACHINE AND METHOD FOR MANUFACTURING DYNAMO-ELECTRIC MACHINE**

(30) Priority: 30.07.2019 JP 2019139771
(71) Applicant: AISIN CORPORATION, Aichi 448-8650 (JP); Art Metal Mfg. Co., Ltd., Ueda-shi, Nagano 386-0027 (JP)
(72) Inventor: KOGA, Kiyotaka, Aichi 448-8650 (JP); MURAKAMI, Satoshi, Aichi 448-8650 (JP); IKEDA, Masaki, Aichi 448-8650 (JP)
(74) Representative: Kramer Barske Schmidtchen Patentanwälte PartG mbB
(86) International application number: PCT/JP2020/029160
(87) International publication number: WO 2021/020479

(57) **Abstract**

There is disclosed a rotating electrical machine for vehicle driving (10) that includes a stator core (112, 112A) made of a first metal material which is a magnetic material; and a case part (60, 60A) that is integrally joined to the stator core and made of a second metal material which is a non-magnetic material, and a joint surface between the case part and the stator core forms a heat receiving surface where the case part receives heat from the stator core.

## Description

### TECHNICAL FIELD

The present disclosure relates to a rotating electrical machine and a method for manufacturing a rotating electrical machine.

### BACKGROUND ART

There is known a technique in which a stator core is fixed to a case with bolts, a gap is radially created between the case and the stator core, and a pipe through which oil for cooling flows is disposed in the gap.

### CITATIONS LIST

### PATENT LITERATURE

Patent Literature 1: JP 2014-158400 A

### SUMMARY OF INVENTION

### TECHNICAL PROBLEMS

However, in a conventional technique such as that described above, since bolts are used to fix the stator core to the case, an air space between the stator core and the case is likely to be created. Hence, when the stator core is cooled through the case, due to the air space between the stator core and the case, transfer of heat from the stator core to the case is hindered, causing a problem of poor heat transfer performance.

The present disclosure therefore enhances heat transfer performance from the stator core to the case.

### SOLUTIONS TO PROBLEMS

According to one aspect of the present disclosure, there is provided a rotating electrical machine for vehicle driving that includes:
a stator core made of a first metal material, the first metal material being a magnetic material; and
a case part that is integrally joined to the stator core and made of a second metal material, the second metal material being a non-magnetic material, and
a joint surface between the case part and the stator core forms a heat receiving surface where the case part receives heat from the stator core.

### ADVANTAGEOUS EFFECTS OF INVENTION

According to the present disclosure, it becomes possible to enhance heat transfer performance from a stator core to a case.

### BRIEF DESCRIPTION OF DRAWINGS

FIG. 1 is a front view schematically showing an external appearance of a motor of a first embodiment.
FIG. 2 is a side view (a plan view viewed in an axial direction) schematically showing a part of the motor.
FIG. 3 is a cross-sectional view schematically showing a part of the motor cut along a plane passing through a central axis of the motor.
FIG. 4 is a perspective view showing a core alone for a cooling water passage.
FIG. 5 is a plan view of a stator core alone.
FIG. 6 is a cross-sectional view of a stator taken along a radial direction.
FIG. 7 is a cross-sectional view of the stator taken along the axial direction.
FIG. 8 is a three-view drawing of one coil piece.
FIG. 9 is a schematic flowchart showing the flow of a method for manufacturing a stator.
FIG. 10 is an illustrative diagram of a method for joining together a supporting case and a stator core.
FIG. 11A is an enlarged view of a joint portion between the supporting case and the stator core.
FIG. 11B is a schematic diagram of the "Q3" portion of FIG. 11A.
FIG. 11C is a schematic diagram for a case of not providing a joint layer.
FIG. 12 is an illustrative diagram of a comparative example.
FIG. 13 is a perspective view of a cross section of a joint portion between a stator core and a supporting case of a second embodiment.

### DESCRIPTION OF EMBODIMENTS

With reference to the accompanying drawings, each embodiment will be described in detail below.

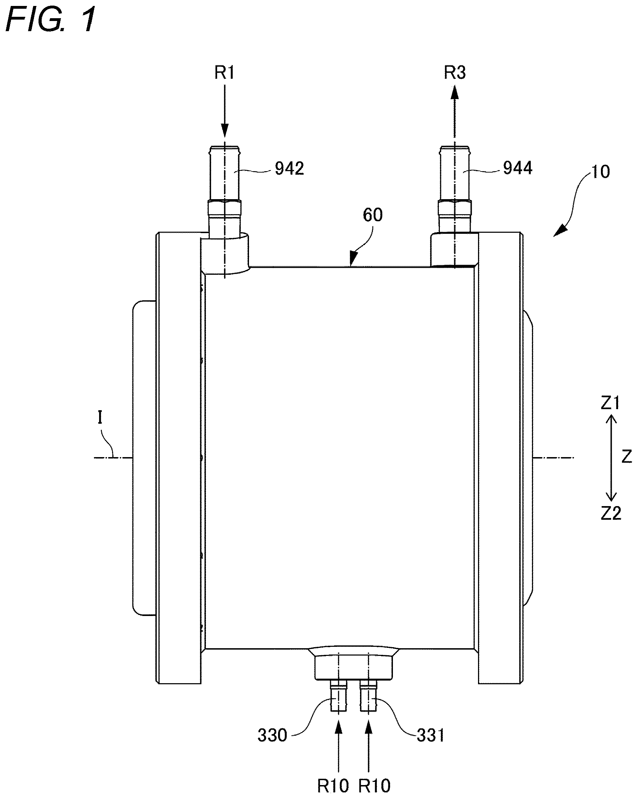

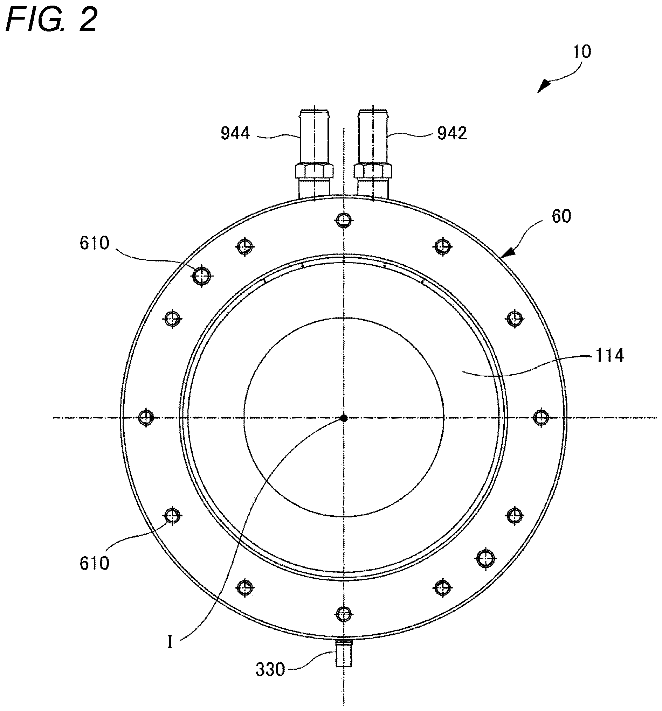

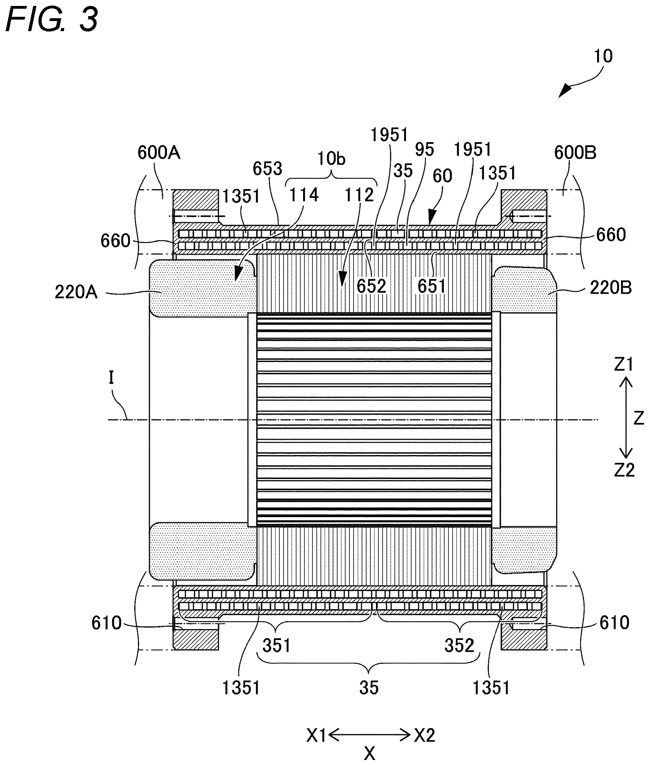

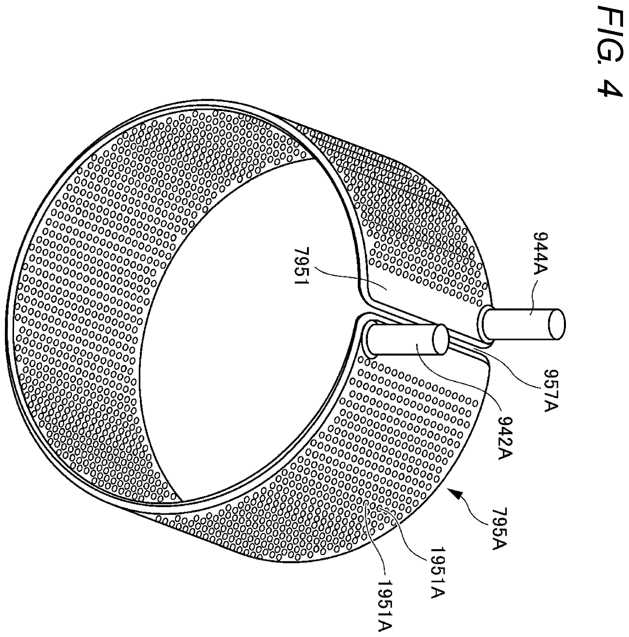

FIG. 1 is a front view schematically showing an external appearance of a motor 10 of the present embodiment, FIG. 2 is a side view (a plan view viewed in an axial direction) schematically showing a part of the motor 10, and FIG. 3 is a cross-sectional view schematically showing a part of the motor 10 cut along a plane passing through a central axis I of the motor 10. FIG. 4 is a perspective view showing a core 795A alone for a cooling water passage 95. In FIGS. 1 to 3, depiction of a rotor of the motor 10 is omitted, and a stator coil 114, etc., are very schematically shown.

In the following, a radial direction is based on the central axis I of the motor 10 (= a central axis of a stator core 112) unless otherwise specifically mentioned. In addition, in the following description, an up-down direction represents an up-down direction in a mounted state of the motor 10 mounted such that the central axis I is substantially parallel to a horizontal direction. In FIG. 1, etc., a Z-direction corresponding to the up-down direction and an X-direction corresponding to the axial direction are shown. In this case, the Z-direction is orthogonal to the central axis I, a Z1 side is an upper side, and a Z2 side is a lower side.

The motor 10 includes a rotor (not shown) and a stator 10b, and the stator 10b includes the stator core 112 and the stator coil 114. The stator coil 114 includes coil ends 220A and 220B at both axial ends thereof.

In addition, the motor 10 includes a supporting case 60 (an example of a case part).

As shown in FIGS. 1 and 2, etc., the supporting case 60 has a cylindrical form and can function as a case of the motor 10. The supporting case 60 has, for example, a form in which both axial sides thereof open (a form in which the supporting case 60 does not substantially overlap the stator core 112 as viewed in the axial direction). The supporting case 60 is coupled to other case members 600A and 600B (schematically shown by dash-dotted lines in FIG. 3) on both axial sides thereof. Note that though not shown in FIG. 3, the case member 600A or 600B on one axial end side may rotatably support the rotor (not shown). Note that in FIGS. 2 and 3, holes 610 for bolt coupling to the other case members 600A and 600B are shown. As such, the supporting case 60 may be coupled to the other case members 600A and 600B in such a manner that the axial end surfaces of the supporting case 60 axially abut on the axial end surfaces of the other case members 600A and 600B. Note that the holes 610 for bolt coupling may be in the form of a through-hole that penetrates in the axial direction or may be in the form of a non-through hole.

The supporting case 60 is made of a material whose main component is aluminum (an example of a second metal material). For example, the supporting case 60 is preferably made of an aluminum alloy with excellent corrosion resistance because, as will be described later, a cooling water passage 95 through which cooling water passes is formed. Any aluminum alloy, e.g., an Al-Si based alloy, an Al-Mg based alloy, and an Al-Mg-Si based alloy, is used.

The supporting case 60 is structured to have hollow parts (cavities) that form a case oil passage 35 and a cooling water passage 95 (see FIG. 3) as will be described later. The supporting case 60 having such hollow parts is a single piece member, and may be formed by casting or may be formed using 3D printing technology.

Specifically, the supporting case 60 may be formed using a core (insert) (see the core 795A of FIG. 4). Here, FIG. 4 schematically shows the core 795A for the cooling water passage 95, and a core for the case oil passage 35 is also prepared likewise. Note that the core 795A shown in FIG. 4 has a cylindrical part 7951 for forming the cooling water passage 95, and a plurality of holes 1951A (radial through-holes) for forming circular cylindrical parts 1951 are made in the cylindrical part 7951. In addition, the core 795A has an axial gap part 957A, and the axial gap part 957A forms a partition wall (not shown) for axially breaking circumferential continuity of the cooling water passage 95 at a top region of the supporting case 60. The gap part 957A has a radially penetrating form. In addition, the core 795A has circular cylindrical parts 942A and 944A for forming an inlet water passage 942 and an outlet water passage 944.

The supporting case 60 can be formed (cast) by setting such two cores in a mold (not shown) in such a manner that the core for the cooling water passage 95 is disposed on the radial inner side of the core for the case oil passage 35 with a gap provided therebetween in the radial direction, and pouring a molten metal material (a material of the supporting case 60, e.g., an aluminum alloy) into the mold. In this case, each core may be, for example, a degradable salt core, and by pouring water onto each core portion of a casting taken out of the mold, salt is dissolved and removed. As a result, the supporting case 60 can be manufactured in which the core portion for the case oil passage 35 (portions around holes for forming circular cylindrical parts 1351) serves as a space (a space such as the case oil passage 35, etc.), the core portion for the cooling water passage 95 (portions around the holes 1951A for forming the circular cylindrical parts 1951 such as those shown in FIG. 4) serves as a space (a space such as the cooling water passage 95, etc.), a radial gap between the core for the case oil passage 35 and the core for the cooling water passage 95 (an annular gap extending in the axial direction over substantially the entire axial length of the supporting case 60) serves as a boundary wall part 652 (see FIG. 3), a gap between an outer circumferential surface of the mold and a surface on a radial outer side of the core for the case oil passage 35 (an annular gap extending in the axial direction over substantially the entire axial length of the supporting case 60) serves as an outside diameter side wall part 653 (see FIG. 3), a gap between an inner circumferential surface of the mold and a surface on a radial inner side of the core for the cooling water passage 95 (an annular gap extending in the axial direction over substantially the entire axial length of the supporting case 60) serves as an inside diameter side wall part 651 (see FIG. 3), and gaps between the mold and both axial end surfaces of the cores (annular gaps) serve as both end wall parts 660 (see FIG. 3).

The supporting case 60 holds the stator core 112 on a radial inner side thereof in such a manner that the supporting case 60 radially comes into contact with the stator core 112. Namely, the supporting case 60 holds the stator core 112 so as to cover a surface on a radial outer side of the stator core 112 with no gap therebetween. In this manner, the supporting case 60 unrotatably supports the stator 10b including the stator core 112.

The supporting case 60 and the stator core 112 are integrated with each other by joining instead of fastening with bolts. Namely, a surface on the radial inner side of the supporting case 60 is joined to the surface on the radial outer side of the stator core 112. A method for joining together the supporting case 60 and the stator core 112 will be described later.

The supporting case 60 preferably holds the stator core 112 in such a manner that the surface on the radial inner side of the supporting case 60 comes into contact with substantially the entire surface on the radial outer side of the stator core 112 (in such a manner that the supporting case 60 and the stator core 112 come into surface contact with each other). In this case, the entire stator core 112 can be efficiently cooled with cooling water that passes through the cooling water passage 95 in the supporting case 60. In the present embodiment, as an example, as shown in FIG. 3, the supporting case 60 extends over the entire length in the X-direction of the stator core 112, and an inner circumferential surface of the supporting case 60 comes into contact with substantially the entire outer circumferential surface of the stator core 112. Note that the term "substantially the entire" outer circumferential surface of the stator core 112 is a concept that a location such as a welding groove (not shown) of the stator core 112 (a location where the outer circumferential surface of the stator core 112 and the inner circumferential surface of the supporting case 60 can be spaced apart from each other in the radial direction) is allowed.

The supporting case 60 forms therein the case oil passage 35 and the cooling water passage 95. Upon the formation, the stator core 112, the cooling water passage 95, and the case oil passage 35 are disposed so as to be adjacent to each other in this order from the radial inner side. Note that the term "adjacent" refers to a manner in which any other portion than material portions related to the supporting case 60 is not interposed.

The cooling water passage 95 is connected to the inlet water passage 942 and the outlet water passage 944. Specifically, the cooling water passage 95 is connected at an end part on an upstream side thereof to the inlet water passage 942, and connected at an end part on a downstream side thereof to the outlet water passage 944. As shown in FIG. 1, the inlet water passage 942 and the outlet water passage 944 may be formed so as to protrude toward a radial outer side of the supporting case 60 (the upper side in the up-down direction).

The cooling water passage 95 extends in a circumferential direction in an axial extending area of the stator core 112. In the present embodiment, as an example, the cooling water passage 95 is formed around multiple circular cylindrical parts 1951 (circular cylindrical parts extending in the radial direction) (see FIGS. 3 and 4). More specifically, a radial inner side of the cooling water passage 95 is partitioned by the inside diameter side wall part 651, a radial outer side of the cooling water passage 95 is partitioned by the boundary wall part 652, and both axial end parts of the cooling water passage 95 are blocked by the both end wall parts 660. In an annular space thus formed (an annular space extending in the axial direction over substantially the entire axial length of the supporting case 60) there are disposed multiple circular cylindrical parts 1951 extending in the radial direction from the inside diameter side wall part 651 to the boundary wall part 652. The multiple circular cylindrical parts 1951 function to allow cooling water to flow over the entire surface on the radial outer side of the stator core 112 without stagnation while serving as resistance to flow. The multiple circular cylindrical parts 1951 may be disposed in the annular space in a distributed and substantially uniform manner. One axial end of the cooling water passage 95 is connected to the inlet water passage 942, and the other axial end of the cooling water passage 95 is connected to the outlet water passage 944.

Note that the core 795A shown in FIG. 4 has, as described above, the axial gap part 957A for forming an axial partition wall (not shown) at the top region of the supporting case 60, and the gap part 957A has a radially penetrating form. By the cooling water passage 95 having a partition wall corresponding to the gap part 957A, flow of cooling water that linearly flows from the inlet water passage 942 to the outlet water passage 944 can be prevented. Namely, in order for cooling water introduced from the inlet water passage 942 to reach the outlet water passage 944, the cooling water needs to flow in the axial direction while going around the radial outer side of the stator core 112, and thus, compared to a case in which cooling water linearly flows from the inlet water passage 942 to the outlet water passage 944, the stator core 112 can be effectively cooled.

The case oil passage 35 extends in the circumferential direction in the axial extending area of the stator core 112. In the present embodiment, as an example, the case oil passage 35 is formed around multiple circular cylindrical parts 1351 (circular cylindrical parts extending in the radial direction) (see FIG. 3). More specifically, a radial inner side of the case oil passage 35 is partitioned by the boundary wall part 652, a radial outer side of the case oil passage 35 is partitioned by the outside diameter side wall part 653, and both axial end parts of the case oil passage 35 are blocked by the both end wall parts 660. In an annular space thus formed (an annular space extending in the axial direction over substantially the entire axial length of the supporting case 60) there are disposed multiple circular cylindrical parts 1351 extending in the radial direction from the boundary wall part 652 to the outside diameter side wall part 653. The multiple circular cylindrical parts 1351 may be disposed in the annular space in a distributed and substantially uniform manner.

In addition, in the present embodiment, as an example, as shown in FIG. 3, the case oil passage 35 includes a first oil passage part 351 on one axial side and a second oil passage part 352 on the other axial side. The first oil passage part 351 and the second oil passage part 352 are independent oil passage parts that do not communicate with each other except on the more upstream side than inlet oil passages 330 and 331. Note that as shown in FIG. 1, the inlet oil passages 330 and 331 may be formed so as to protrude toward a radial outer side of the supporting case 60 (the lower side in the up-down direction).

The first oil passage part 351 extends in the circumferential direction on one side (the X1 side in this example) of the axial extending area of the stator core 112. The first oil passage part 351 has a cylindrical form around the central axis I (a cylindrical form including the radial circular cylindrical parts 1351 as described above), and one end of the first oil passage part 351 communicates with the inlet oil passage 330 and the other end of the first oil passage part 351 opens at an oil dripping part (not shown).

The second oil passage part 352 extends in the circumferential direction on the other side (the X2 side in this example) of the axial extending area of the stator core 112. The second oil passage part 352 has a cylindrical form around the central axis I (a cylindrical form including the radial circular cylindrical parts 1351 as described above), and one end of the second oil passage part 352 communicates with the inlet oil passage 331 and the other end of the second oil passage part 352 opens at an oil dripping part (not shown).

Note that in the present embodiment, as an example, the first oil passage part 351 and the second oil passage part 352 have a symmetrical form in which the first oil passage part 351 and the second oil passage part 352 are separated from each other at a point near the center of the axial extending area of the stator core 112. By this, it becomes easier to uniformly cool the stator core 112 with oil that passes through each of the first oil passage part 351 and the second oil passage part 352, while the case oil passage 35 is separated in the axial direction. Note, however, that in a variant, the first oil passage part 351 and the second oil passage part 352 may have an asymmetrical form with respect to the center of the axial extending area of the stator core 112, or as with the cooling water passage 95, the first oil passage part 351 and the second oil passage part 352 may communicate (continue) with each other.

Now, an outline of flow of cooling water and oil in the above-described cooling water passage 95 and case oil passage 35 will be described.

Cooling water supplied to the inlet water passage 942 (see an arrow R1 of FIG. 1) enters the cooling water passage 95, passes through the cooling water passage 95, flows from the X1 side to the X2 side while traveling around the central axis I on the radial outer side of the stator core 112, and exits from the outlet water passage 944 (see an arrow R3 of FIG. 1).

Oil supplied to the inlet oil passages 330 and 331 (see arrows R10 of FIG. 1) is supplied to the first oil passage part 351 and the second oil passage part 352 of the case oil passage 35, and the oil supplied to the first oil passage part 351 flows toward the X1 side while traveling around the central axis I, reaches a portion of the top region at an X1-side end part, and drips onto the coil end 220Aon the X1 side from an oil dripping part (not shown) (not shown). Likewise, the oil supplied to the second oil passage part 352 flows toward the X2 side while traveling around the central axis I, reaches a portion of the top region at an X2-side end part, and drips onto the coil end 220B on the X2 side from an oil dripping part (not shown) (not shown).

According to the example shown in FIGS. 1 to 4, since the supporting case 60 that forms the cooling water passage 95 comes into contact with the stator core 112, only the inside diameter side wall part 651 of the supporting case 60 is present between cooling water and the stator core 112. Here, cooling water is cooled by a radiator (not shown) performing heat exchange with outside air (e.g., air that passes through when a vehicle travels), and oil is cooled by heat exchange with cooling water in the cooling water passage 95, and thus, the cooling water has a lower temperature than the oil. Therefore, compared to a case in which, for example, other media such as oil or other members are interposed between cooling water and the stator core 112, the stator core 112 can be efficiently cooled with cooling water.

In addition, according to the example shown in FIGS. 1 to 4, since, as described above, the cooling water passage 95 extends over the entire axial area of the stator core 112 and extends over the entire circumferential area of the stator core 112 on the radial outer side of the stator core 112, heat can be removed from the entire stator core 112.

In addition, according to the example shown in FIGS. 1 to 4, since the cooling water passage 95 and the case oil passage 35 are formed in the supporting case 60, a boundary part between the cooling water passage 95 and the case oil passage 35 can be formed in the supporting case 60. Namely, since the supporting case 60 that forms the cooling water passage 95 forms the case oil passage 35, only the boundary wall part 652 of the supporting case 60 is present between cooling water and oil in the radial direction. Thus, compared to a case in which, for example, other members are interposed between cooling water and oil, the oil can be efficiently cooled with the cooling water. Therefore, according to the example shown in FIGS. 1 to 4, even the motor 10 with relatively high output can eliminate the need of an oil cooler.

In addition, according to the example shown in FIGS. 1 to 4, as described above, while the supporting case 60 is a single piece member, the supporting case 60 forms therein the cooling water passage 95 and the case oil passage 35, and thus, compared to a configuration in which a supporting case such as the supporting case 60 is formed by coupling two or more members together, the number of parts can be reduced and a structure for coupling (e.g., a bolt fastening structure) or the like is unnecessary, by which a simple configuration can be implemented.

Note that in the example shown in FIGS. 1 to 4, oil in the case oil passage 35 may always circulate during operation of the motor 10 or may circulate only during a part of a period during which the motor 10 operates. For example, oil in the case oil passage 35 is, as described above, mainly used to cool the coil ends 220A and 220B, and thus, the oil may circulate only during a period during which heat generation of the coil ends 220A and 220B is relatively high.

Note that although FIGS. 1 to 4 show the motor 10 having a specific structure, the motor 10 may adopt any structure as long as the stator core 112 and the supporting case 60 are joined together. Thus, the supporting case 60 may not have one or both of the cooling water passage 95 and the case oil passage 35. When the supporting case 60 does not have the cooling water passage 95 and the case oil passage 35, the supporting case 60 may have a solid structure. In addition, although in FIGS. 1 to 4 a specific cooling method is disclosed, any cooling method for the motor 10 is adopted. Thus, for example, the cooling water passage 95 and the case oil passage 35 may be formed such that cooling water and oil each spirally travel around the central axis I.

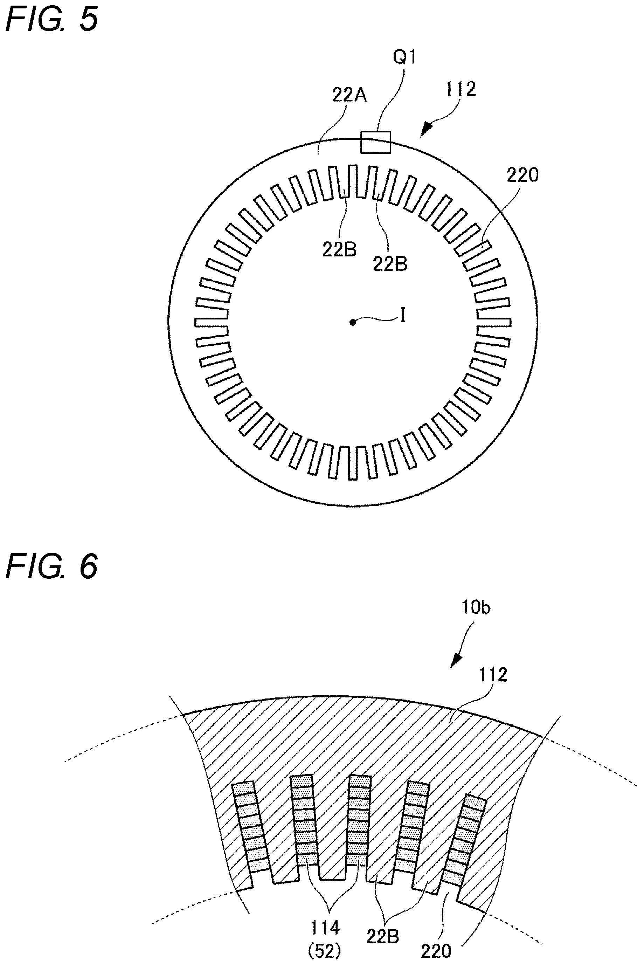

Next, with reference to FIGS. 5 to 8, the stator core 112 and stator coil 114 of the motor 10 will be described.

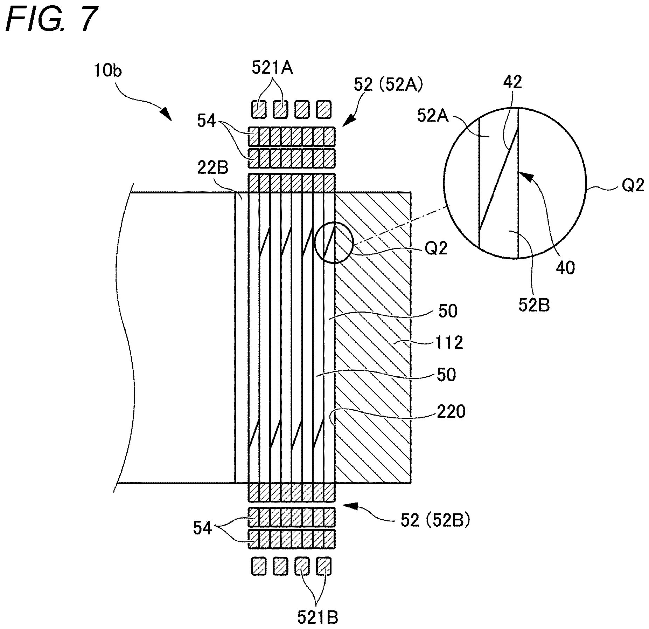

FIG. 5 is a plan view of the stator core 112 alone. FIG. 6 is a cross-sectional view of the stator 10b with coil pieces 52 assembled into the stator core 112, taken along the radial direction. FIG. 7 is a cross-sectional view of the stator 10b with coil pieces 52 assembled into the stator core 112, taken along the axial direction. Note that FIG. 7 also shows an enlarged view of the "Q2" portion of the drawing.

As described above, the stator 10b includes the stator core 112 and the stator coil 114.

The stator core 112 is made of a material whose main component is iron (an example of a first metal material). For example, the stator core 112 is formed of, for example, annular laminated magnetic steel sheets, but in a variant, the stator core 112 may be formed of a green compact obtained by compressing and solidifying magnetic powder. Note that the stator core 112 may be formed of divided cores which are divided in the circumferential direction, or may not be divided in the circumferential direction. A plurality of slots 220 around which the stator coil 114 is wound are formed on the radial inner side of the stator core 112. Specifically, as shown in FIG. 5, the stator core 112 includes an annular back yoke 22A and a plurality of teeth 22B extending toward a radial inner side from the back yoke 22A, and the slots 220 are circumferentially formed between the plurality of teeth 22B. The number of the slots 220 may be any number, but in the present embodiment, as an example, the number of the slots 220 is 48. Note that the width on the radial inner side (circumferential width) of the slot 220 may be set to be less than the width on the radial outer side of the slot 220.

The stator coil 114 includes a U-phase coil, a V-phase coil, and a W-phase coil (when U, V, and W are not distinguished from each other, the coils are hereinafter referred to as "phase coils"). Abase end of each phase coil is connected to an input terminal (not shown), and a terminal end of each phase coil is connected to terminal ends of other phase coils, forming a neutral point of the motor 10. Namely, the stator coil 114 is star-connected. Note, however, that a connection mode of the stator coil 114 may be changed as appropriate according to required motor characteristics, etc. For example, the stator coil 114 may be delta-connected instead of being star-connected.

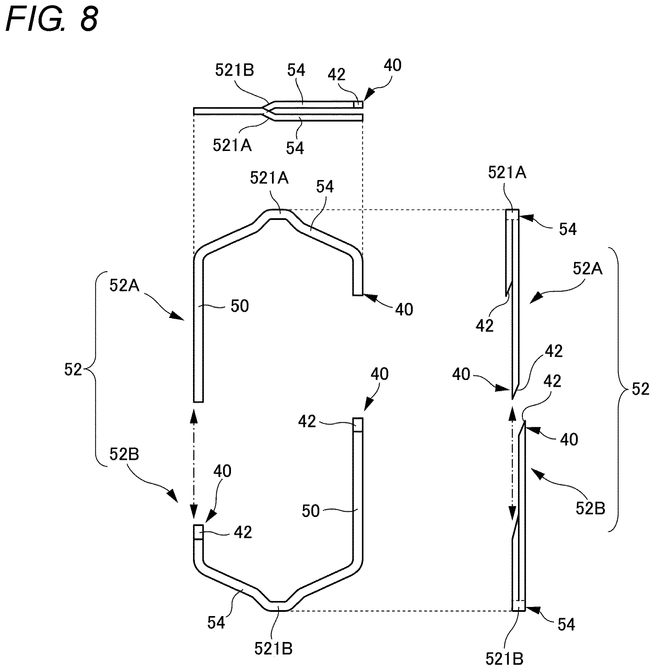

Each phase coil is formed by coupling together a plurality of coil pieces 52. FIG. 8 is a three-view drawing of one coil piece 52. The coil piece 52 is in the form of segment coils (segment conductors) into which a phase coil is divided in an easy-to-assemble unit (e.g., a unit in which the phase coil is inserted into two slots 220). The coil piece 52 is formed by covering a linear conductor (rectangular wire) whose cross section is substantially rectangular by an insulating coating (not shown). In the present embodiment, the linear conductor is made of, as an example, copper. Note, however, that in a variant, the linear conductor may be made of other conductor materials such as iron.

One coil piece 52 is formed by coupling together a first segment conductor 52A on one axial side and a second segment conductor 52B on the other axial side. The first segment conductor 52A and the second segment conductor 52B each may be formed in substantially U shape having a pair of linear conductor side parts 50 and a connecting part 54 that connects the pair of conductor side parts 50 together. Upon assembling the coil piece 52 into the stator core 112, each pair of conductor side parts 50 are inserted into respective slots 220 (see FIG. 7). In this case, the coil piece 52 can be assembled, for example, in the axial direction.

In one slot 220, a plurality of conductor side parts 50 of coil pieces 52 shown in FIG. 7 are inserted so as to be arranged side by side in the radial direction. Thus, at both axial ends of the stator core 112, a plurality of connecting parts 54 extending in the circumferential direction are arranged side by side in the radial direction. In the present embodiment, as an example, eight coil pieces 52 are assembled into one slot 220 (i.e., an 8-layer winding structure). Note that the connecting parts 54 create the coil ends 220A and 220B.

In the present embodiment, as shown in FIG. 8, in the first segment conductor 52A, one of the conductor side parts 50 on both circumferential sides is long and the other one is short, and in the second segment conductor 52B, the other one of the conductor side parts 50 on both circumferential sides is long and one is short. By this, two coupling parts for each of the first segment conductor 52A and the second segment conductor 52B can be offset in the axial direction. In addition, in the present embodiment, one of the conductor side parts 50 on both circumferential sides of the first segment conductor 52A and one of the conductor side parts 50 on both circumferential sides of the second segment conductor 52B can be coupled together, whereas the other ones are offset in a direction in which they are radially spaced apart from each other by one layer. Specifically, the first segment conductor 52A and the second segment conductor 52B have offset parts 521A and 521B, respectively, at top parts of facing surfaces 42, and the offset parts 521A and 521B radially implement an offset in opposite directions.

The coil piece 52 is wound around the stator core 112 in lap winding form. In this case, as shown in FIG. 7, of conductor side parts 50 on both circumferential sides of each of a first segment conductor 52A and a second segment conductor 52B included in one coil piece 52, coupling parts 40 of conductor side parts 50 on one side are coupled together. In this case, each conductor side part 50 on the other side is coupled to another coil piece 52. At this time, the coupling parts 40 have facing surfaces 42 that entirely face each other in the radial direction and come into surface contact with each other, and the coupling parts 40 are coupled together with the facing surfaces 42 overlapping each other.

Note that for a coupling method used when coupling parts 40 of a coil piece 52 are coupled together, welding is used. For example, for a welding method, arc welding represented by TIG welding may be adopted or laser welding that uses a laser beam source as a heat source may be adopted.

According to the example shown in FIGS. 5 to 8, since the stator coil 114 is formed of the coil pieces 52 in the form of segment coils, the occupancy rate in the slots 220 of the stator core 112 can be effectively increased. Note that the configuration of the stator coil 114 may be the same as that described in WO 2019/059293 A1, and the content described in this literature is incorporated in this specification by reference here. For example, the first segment conductor 52A and the second segment conductor 52B of the coil piece 52 may be the same as a first segment conductor and a second segment conductor of a coil piece described in the literature.

Note that although FIGS. 5 to 8 show the stator core 112 and the stator coil 114 having specific structures, the stator core 112 and the stator coil 114 may have any structure as long as the stator coil 114 is formed of coil pieces 52 in the form of segment coils. In addition, the form of a coil piece in the form of segment coils is not limited to that of the coil piece 52 in which the segment coils are coupled in slots 220 of the stator core 112, and other forms such as a form in which the segment coils are coupled on one axial end side may be adopted. In addition, the stator coil 114 may also be wound in any manner, and any other way of winding than the above-described lap winding form, such as a wave-winding form, may be adopted.

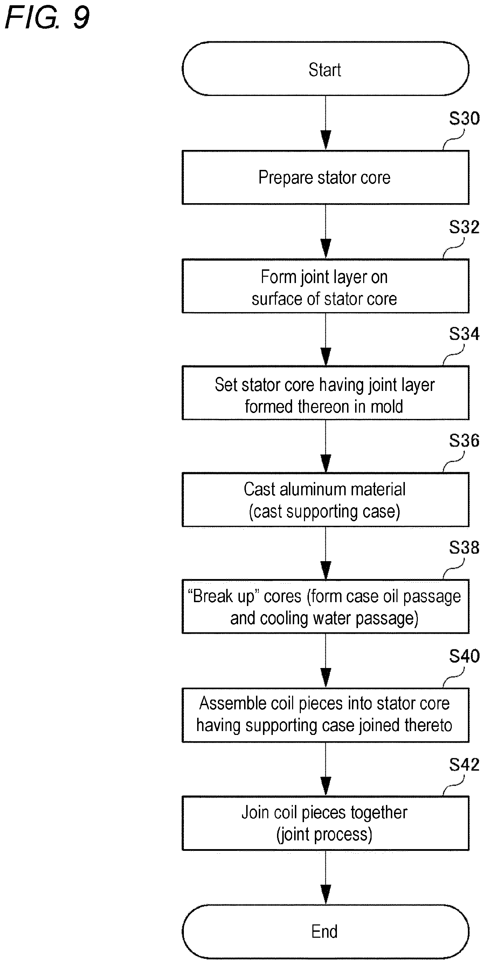

Next, with reference to FIG. 9 and subsequent drawings, a method for joining together the supporting case 60 and the stator core 112 will be described together with a method for manufacturing the stator 10b.

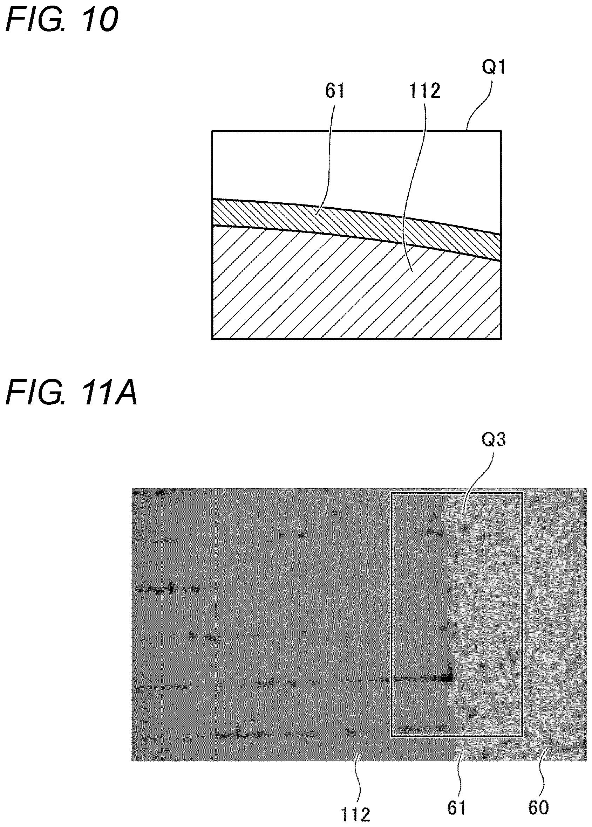

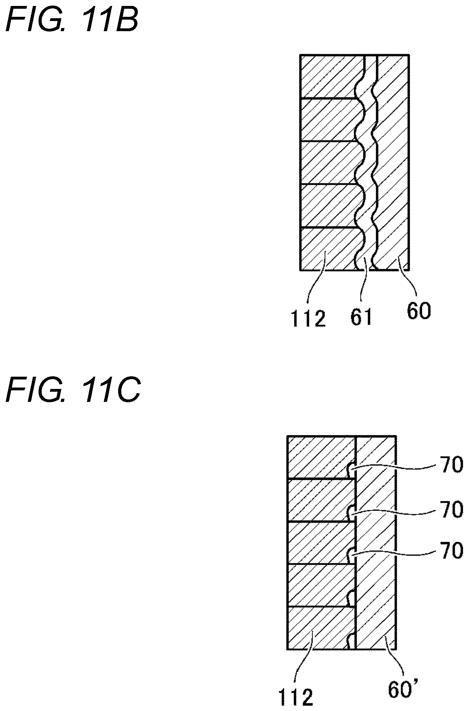

FIG. 9 is a schematic flowchart showing the flow of a method for manufacturing the stator 10b, and FIG. 10 is an illustrative diagram of a method for joining together the supporting case 60 and the stator core 112 and an enlarged view of the stator core 112 with a joint layer 61 formed thereon (an enlarged view of the "Q1" portion of FIG. 5). FIG. 11A is an enlarged view (photo) of a joint portion between the supporting case 60 and the stator core 112. FIG. 11B is a schematic diagram of the "Q3" portion of FIG. 11A. FIG. 11C is a schematic diagram for a case of not providing the joint layer 61.

The method for manufacturing the stator 10b first includes preparation of a stator core 112 (step S30). The stator core 112 is formed of, for example, annular laminated magnetic steel sheets. In this case, the steel sheets may not be coupled together or may be coupled together by welding, etc.

Then, the method for manufacturing the stator 10b includes formation of a joint layer 61 (see FIG. 10) on a surface (a surface on the radial outer side) of the stator core 112 (step S32). The joint layer 61 is a layer for facilitating joining a material whose main component is aluminum and which is introduced in the next process to the surface of the stator core 112, and the joint layer 61 is an alloy layer of iron and aluminum. The alloy layer of iron and aluminum can be formed by, for example, performing an aluminizing process. The aluminizing process may be implemented by sequentially immersing the stator core 112 into a bath such as an aluminum bath (e.g., a molten aluminum bath). In the case of an aluminizing process, a part of the surface of the stator core 112 is molten, forming an alloy layer with aluminum. Since the joint layer 61 is formed by melting a part of the surface of the stator core 112, the joint layer 61 and the stator core 112 are firmly integrated together.

The joint layer 61 is preferably formed so as to cover the entire area of the stator core 112 that is joined to the supporting case 60. By this, a firm joint between the stator core 112 and the supporting case 60 can be achieved over the entire joint area between the stator core 112 and the supporting case 60.

Then, the method for manufacturing the stator 10b includes setting of the stator core 112 having the joint layer 61 formed thereon in a mold (not shown) (step S34). Upon the setting, cores for forming the above-described case oil passage 35 and cooling water passage 95 (see the core 795A of FIG. 4) are set in the mold.

Then, the method for manufacturing the stator 10b includes casting of a supporting case 60 by casting (pouring) a molten material whose main component is aluminum (hereinafter, also simply referred to as "aluminum material") into the mold in which the stator core 112 (the stator core 112 having the joint layer 61 formed thereon) is set (step S36). Note that although, in the present embodiment, a die casting (aluminum gravity die casting) method in which casting is performed using only the weight of a molten aluminum material is adopted, other casting methods may be used.

Here, the joint layer 61 is, as described above, formed on the surface of the stator core 112 set in the mold. Thus, by introducing a molten aluminum material into the mold, the aluminum material is integrated with aluminum contained in the joint layer 61. In this manner, the supporting case 60 can be firmly joined to the surface of the stator core 112 through the joint layer 61. Particularly, according to the present embodiment, since the joint layer 61 is formed, as shown in FIGS. 11A and 11B, the supporting case 60 can be joined to the surface of the stator core 112 with no gap therebetween. Note that when a supporting case 60' and the stator core 112 are coupled together by shrink fitting without providing the joint layer 61, as shown in FIG. 11C, air spaces (clearances) 70 resulting from unevenness (radial unevenness extending in the axial direction) on an outer circumferential surface of the stator core 112 are likely to be created between the supporting case 60' and the stator core 112. On the other hand, according to the present embodiment, as shown in FIG. 11B, the supporting case 60 can be formed so as to cover the unevenness on the outer circumferential surface of the stator core 112.

Then, the method for manufacturing the stator 10b includes "breakup" of the cores for forming the above-described case oil passage 35 and cooling water passage 95 (see the core 795A of FIG. 4) (step S38). By this, the above-described case oil passage 35 and cooling water passage 95 are formed in the supporting case 60.

Then, the method for manufacturing the stator 10b includes assembling of coil pieces 52 into the stator core 112 having the supporting case 60 joined thereto as described above (step S40). In this case, the coil pieces 52 can be easily assembled into slots 220 of the stator core 112 in the axial direction (or from the radial inner side).

Then, the method for manufacturing the stator 10b includes coupling of the coil pieces 52 (coupling process) (step S42).

In this manner, according to the example shown in FIG. 9, by forming the joint layer 61 by an aluminizing process, a stator 10b in which the stator core 112 and the supporting case 60 are firmly joined together can be easily manufactured. Note that a rotor (not shown) is assembled on the radial inner side of the stator 10b thus manufactured, by which a motor 10 can be formed.

Note that although in the example shown in FIG. 9, the joint layer 61 is formed before setting the stator core 112 in a mold (not shown), the joint layer 61 may be formed in a mold (not shown) after setting the stator core 112 in the mold.

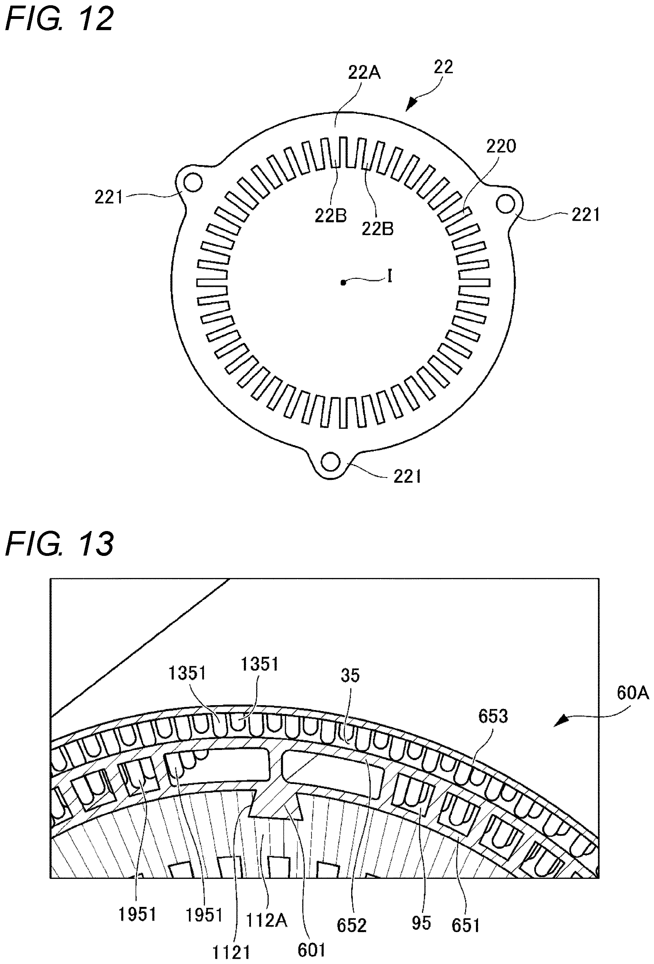

Next, advantageous effects of the present embodiment will be described by comparing with a comparative example of FIG. 12.

FIG. 12 is an illustrative diagram of a comparative example and a plan view showing a stator core 22 of the comparative example. The comparative example differs from the present embodiment in which the stator core 112 is joined to the supporting case 60 in that the stator core 22 is fastened to a case (not shown) with bolts. In such a comparative example, there are provided bolt fastening parts 221 for fastening the stator core 22 to the case (not shown) with bolts.

According to the present embodiment, as described above, since the stator core 112 and the supporting case 60 are joined together, compared to the comparative example (see FIG. 12) in which the stator core is fastened to the case with bolts, thermal resistance between the stator core 112 and the supporting case 60 can be reduced. Namely, in the comparative example, air spaces resulting from unevenness on the outer circumferential surface of the stator core (see the air spaces 70 of FIG. 11C) are likely to be created between the stator core and the case, and thermal resistance is likely to increase due to the air spaces. On the other hand, according to the present embodiment, since the stator core 112 and the supporting case 60 are joined together as described above, unevenness (radial unevenness extending in the axial direction) on the outer circumferential surface of the stator core 112 is covered by the material of the supporting case 60. Namely, a joint surface of the supporting case 60 which serves as a heat receiving surface for heat from the stator core 112 does not include air spaces. Thus, according to the present embodiment, thermal resistance between the stator core 112 and the supporting case 60 can be effectively reduced. As a result, according to the present embodiment, heat transfer from the stator core 112 to the supporting case 60 is promoted, enabling efficient cooling of the stator core 112 through the supporting case 60.

In addition, according to the present embodiment, as described above, since the stator core 112 and the supporting case 60 are joined together, compared to the comparative example (see FIG. 12) in which the stator core is fastened to the case with bolts, the number of parts can be reduced for not using bolts, and occurrence of distortion of the stator core due to bolt fastening can be prevented.

In addition, according to the present embodiment, as described above, there is no need to provide the bolt fastening parts 221 of the comparative example (see FIG. 12) on the radial outer side of the stator core 112. By this, unevenness on the surface on the radial outer side of the stator core 112 can be reduced, and thus, it becomes easier to uniformly and circumferentially cool the radial outer side of the stator core 112 with cooling water in the cooling water passage 95 in the supporting case 60. Namely, in the comparative example, in circumferential areas where the bolt fastening parts 221 are provided out of the entire circumferential surface on the radial outer side of the stator core 22, due to an increase in the radial thickness of the stator core 22, cooling performance for cooling parts on the radial inner side of the stator core 22 are likely to decrease over other circumferential areas. On the other hand, according to the present embodiment, as shown in FIG. 5, since the stator core 112 does not have significant unevenness on the surface on the radial outer side thereof, uniform cooling performance can be achieved over the entire circumferential area. Note, however, that in a variant, a projection or a recess (e.g., a groove part) for enhancing joint strength to the supporting case 60 may be formed on/in the surface on the radial outer side of the stator core 112 (see FIG. 13). In this case, too, since the projection or recess does not need to be a relatively large projection like the bolt fastening parts 221, the joint strength to the supporting case 60 can be enhanced without significantly hindering uniformity of circumferential cooling performance.

In addition, according to the present embodiment, as described above, since the stator coil 114 is formed using coil pieces 52 in the form of segment coils, the coil pieces 52 can be easily assembled into the stator core 112 having the supporting case 60 joined thereto, and coupled together as described above.

In addition, according to the present embodiment, as described above, since both the cooling water passage 95 and the case oil passage 35 are provided in the supporting case 60, compared to, for example, a comparative example (not shown) in which a radial gap is created between a case and a stator core and a pipe for cooling runs through the gap, the radial physical size of the motor 10 can be efficiently reduced.

Next, with reference to FIG. 13, another embodiment will be described. In the following, for the sake of distinction, the above-described embodiment is also referred to as "first embodiment".

FIG. 13 is an illustrative diagram of a joint portion between a supporting case 60A and a stator core 112A of another embodiment (second embodiment), and a perspective view of a part of the joint portion (top region) between the supporting case 60A and the stator core 112A cut along a plane perpendicular to the central axis I.

The supporting case 60A of the second embodiment differs from the supporting case 60 of the above-described first embodiment in that a surface on the radial inner side of the supporting case 60A (a surface joined to the stator core 112A) has a wedge-shaped protrusion 601 that protrudes toward the radial inner side in a wedge-like manner.

In addition, the stator core 112A of the second embodiment differs from the stator core 112 of the above-described first embodiment in that a surface on the radial outer side of the stator core 112A (a surface joined to the supporting case 60A) has a wedge-shaped recessed part 1121 that is recessed toward the radial inner side in a wedge-like manner. Note that when the stator core 112A is formed of laminated steel sheets, the wedge-shaped recessed part 1121 can be easily formed upon stamping of the steel sheets.

As shown in FIG. 13, the wedge-shaped protrusion 601 of the supporting case 60A is formed in the wedge-shaped recessed part 1121 of the stator core 112A. By this, the joint strength between the stator core 112A and the supporting case 60A can be efficiently enhanced.

In the second embodiment, too, as with the supporting case 60 of the above-described first embodiment, the supporting case 60A can be formed by casting (pouring) a molten aluminum material onto the radial outer side of the stator core 112A set in a mold. Upon the formation, by the aluminum material flowing into the wedge-shaped recessed part 1121, the wedge-shaped protrusion 601 is formed.

Here, in the second embodiment, by the formation of the wedge-shaped protrusion 601 in the wedge-shaped recessed part 1121, the joint strength between the stator core 112A and the supporting case 60A is enhanced, and thus, the above-described aluminizing process may not be needed or an area to which the aluminizing process is applied may be reduced. Alternatively, a configuration may be adopted in which with an aluminizing process performed, the joint strength is further enhanced by the wedge-shaped recessed part 1121 and the wedge-shaped protrusion 601.

In the second embodiment, too, the same advantageous effects as those of the above-described first embodiment are obtained. Particularly, according to the second embodiment, the joint strength between the stator core 112A and the supporting case 60A can be efficiently enhanced by the wedge-shaped recessed part 1121 and the wedge-shaped protrusion 601.

Note that in the second embodiment, the formation area of the wedge-shaped recessed part 1121 and the wedge-shaped protrusion 601 may extend over the entire axial length or may be a part of an axial area. In addition, in the second embodiment, a plurality of formation areas of wedge-shaped recessed parts 1121 and wedge-shaped protrusions 601 may be set in the circumferential direction.

In addition, although, in the above-described second embodiment, the wedge-shaped recessed part 1121 and the wedge-shaped protrusion 601 are used, a recessed part and a protrusion in other forms may be used. For example, instead of the wedge-shaped protrusion 601, a protrusion in a form in which the width (circumferential dimension) of the protrusion gets thinner as going toward the radial inner side may be used or a protrusion having a constant circumferential width may be used. Note, however, that a wedge-shaped protrusion 601 in a form in which the width (circumferential dimension) of the wedge-shaped protrusion 601 gets wider as going toward the radial inner side is advantageous in terms of being able to efficiently enhance joint strength.

In addition, although, in the above-described second embodiment, the wedge-shaped recessed part 1121 is formed in the stator core 112A and the wedge-shaped protrusion 601 is formed on the supporting case 60A, they may be the other way around. Namely, a wedge-shaped recessed part that is recessed toward the radial outer side may be formed on the supporting case side, and a wedge-shaped protrusion that protrudes toward the radial outer side may be formed on the stator core.

Although each embodiment is described in detail above, the present disclosure is not limited to specific embodiments, and various modifications and changes that fall within the scope recited in the claims can be made. In addition, it is also possible to combine together all or a plurality of components of the above-described embodiments.

For example, although, in the above-described first embodiment (the same can also be said for the second embodiment), the cooling water passage 95 and the case oil passage 35 are formed in the supporting case 60, only either one of the cooling water passage 95 and the case oil passage 35 may be formed in the supporting case 60 or both of the cooling water passage 95 and the case oil passage 35 may not be formed in the supporting case 60. In the latter case, heat from the stator core 112 may be released to outside air through the supporting case 60. Namely, heat dissipation from the supporting case 60 by air cooling may be implemented.

### [Summary of the present embodiment]

Note that of the advantageous effects described below, an advantageous effect obtained by each additional mode to one mode is an additional advantageous effect resulting from the each additional mode.
(1) In one mode, a rotating electrical machine (10) for vehicle driving includes:
   a stator core (112, 112A) made of a first metal material which is a magnetic material; and
   a case part (60, 60A) that is integrally joined to the stator core and made of a second metal material which is a non-magnetic material, and
   a joint surface between the case part and the stator core forms a heat receiving surface where the case part receives heat from the stator core.

   According to the present mode, since the case part that is integrally joined to the stator core is provided, air spaces that can be created between the stator core and the case are eliminated or minimized, enabling an effective reduction in thermal resistance between the stator core and the case part. As a result, the stator core can be effectively cooled through the case part. In addition, the necessity of bolts for fixing the stator core to the case can be reduced.
   The term "integrally joined" or "joined" used here refers to a joint form in which separation into two or more parts is substantially impossible, and includes, for example, a joint form involving a change in a composition of a joint portion or a joint form used upon integral formation in a mold, but does not include a coupling form using fixtures such as bolts or a coupling form using shrink fitting or a press fit.
(2) In addition, in the present mode, it is preferred that a surface on a radial inner side of the case part be integrally joined to a surface on a radial outer side of the stator core.
   In this case, the stator core and the case part can be integrally joined together in such a manner that the surface on the radial outer side of the stator core and the surface on the radial inner side of the case part are integrally joined together.
(3) In addition, in the present mode, it is preferred that
   a surface on a radial outer side of the stator core have radial unevenness extending in an axial direction, and
   a surface on a radial inner side of the case part come into surface contact with the surface on the radial outer side of the stator core so as to cover the unevenness.

   In this case, the contact area between the case part and the stator core can be efficiently increased, enabling effective enhancement of thermal conductivity from the stator core to the case part.
(4) In addition, in the present mode, it is preferred that at least either one of a cooling water passage (95) and an oil passage (35) be formed in the case part.
   In this case, compared to a comparative example (not shown) in which a radial gap is created between the case part and the stator core and a pipe for cooling runs through the gap, the radial physical size of the rotating electrical machine can be efficiently reduced. Namely, when a gap is radially created between the case part and the stator core, the radial physical size tends to increase, but in the present mode, the need of such a gap can be eliminated and thus a reduction in the radial physical size of the rotating electrical machine can be achieved.
(5) In addition, in the present mode, it is preferred that the case part cover a surface on a radial outer side of the stator core.
   In this case, the case part can be joined to the radial outer side of the stator core with no gap therebetween. Thus, when at least either one of a cooling water passage and an oil passage is formed in the case part, the stator core can be efficiently cooled from the surface on the radial outer side thereof.
(6) In addition, in the present mode, it is preferred that the first metal material be a material whose main component is iron, and the second metal material be a material whose main component is aluminum.
   In this case, for example, using an aluminizing process, the joint strength between the case part and the stator core can be enhanced.
(7) In addition, in the present mode, it is preferred that
   the stator core be formed of an annular steel sheet laminate, and
   a plurality of segment conductors (52) be assembled into the stator core.

   In this case, a plurality of segment conductors can be easily assembled into the stator core with the case part joined thereto.
(8) In another mode, a method for manufacturing a rotating electrical machine (10) includes:
   setting a stator core (112, 112A) made of a first metal material which is a magnetic material in a mold; and
   casting a second metal material which is a non-magnetic material into the mold, and
   the second metal material forms a case part (60, 60A) of the stator core.

   According to the present mode, since the case part is integrally joined to the stator core, the necessity of bolts for fixing the stator core to the case can be reduced.
(9) In addition, in the present mode, it is preferred that in the casting step, the second metal material be poured into the mold so as to cover a surface on a radial outer side of the stator core.
   In this case, the stator core and the case part can be integrally joined together in such a manner that the surface on the radial outer side of the stator core and a surface on a radial inner side of the case part are integrally joined together.
(10) In addition, in the present mode, it is preferred that
   the method further include, before the casting step, a joint layer forming step of forming a joint layer (61) on a surface of the stator core, and
   in the casting step, the second metal material be poured into the mold so as to cover the joint layer on a surface on a radial outer side of the stator core.

   In this case, by forming the joint layer, the joint strength between the case part and the stator core can be effectively enhanced.
(11) In addition, in the present mode, it is preferred that
   the first metal material be a material whose main component is iron, and the second metal material be a material whose main component is aluminum, and
   the joint layer include an alloy layer of iron and aluminum.

   In this case, using an alloy layer of iron and aluminum, the joint strength between the case part and the stator core can be effectively enhanced.
(12) In addition, in the present mode, it is preferred that the joint layer forming step include forming the alloy layer by an aluminizing process in which the stator core is immersed into an aluminum bath.
   In this case, using an aluminizing process, the joint strength between the case part and the stator core can be enhanced.
(13) In addition, in the present mode, it is preferred that the method further include a step of assembling a plurality of segment conductors (52) into slots of the stator core to which the second metal material is joined, and coupling the plurality of assembled segment conductors.
   In this case, a plurality of segment conductors can be easily assembled into the stator core with the case part joined thereto.

### REFERENCE SIGNS LIST

10: Motor (rotating electrical machine), 35: Case oil passage (oil passage), 52: Coil piece (segment conductor), 60, 60A: Supporting case (case part), 61: Joint layer, 95: Cooling water passage, and 112, 112A: Stator core

## Claims

1. A rotating electrical machine for vehicle driving comprising:
a stator core made of a first metal material, the first metal material being a magnetic material; and
a case part that is integrally joined to the stator core and made of a second metal material, the second metal material being a non-magnetic material,
wherein
a joint surface between the case part and the stator core forms a heat receiving surface where the case part receives heat from the stator core.

2. The rotating electrical machine according to claim 1, wherein a surface on a radial inner side of the case part is integrally joined to a surface on a radial outer side of the stator core.

3. The rotating electrical machine according to claim 1 or 2, wherein
a surface on a radial outer side of the stator core has radial unevenness extending in an axial direction, and
a surface on a radial inner side of the case part comes into surface contact with the surface on the radial outer side of the stator core so as to cover the unevenness.

4. The rotating electrical machine according to any one of claims 1 to 3, wherein at least either one of a cooling water passage and an oil passage is formed in the case part.

5. The rotating electrical machine according to any one of claims 1 to 4, wherein the case part covers a surface on a radial outer side of the stator core.

6. The rotating electrical machine according to any one of claims 1 to 5, wherein the first metal material is a material whose main component is iron, and the second metal material is a material whose main component is aluminum.

7. The rotating electrical machine according to any one of claims 1 to 6, wherein
the stator core is formed of an annular steel sheet laminate, and
a plurality of segment conductors are assembled into the stator core.

8. A method for manufacturing a rotating electrical machine comprising:
a setting step of setting a stator core made of a first metal material in a mold, the first metal material being a magnetic material; and
a casting step of casting a second metal material into the mold, the second metal material being a non-magnetic material,
wherein
the second metal material forms a case part of the stator core.

9. The method for manufacturing a rotating electrical machine according to claim 8, wherein in the casting step, the second metal material is poured into the mold so as to cover a surface on a radial outer side of the stator core.

10. The method for manufacturing a rotating electrical machine according to claim 8 or 9, further comprising, before the casting step, a joint layer forming step of forming a joint layer on a surface of the stator core,
wherein
in the casting step, the second metal material is poured into the mold so as to cover the joint layer on a surface on a radial outer side of the stator core.

11. The method for manufacturing a rotating electrical machine according to claim 10, wherein
the first metal material is a material whose main component is iron, and the second metal material is a material whose main component is aluminum, and
the joint layer includes an alloy layer of iron and aluminum.

12. The method for manufacturing a rotating electrical machine according to claim 11, wherein the joint layer forming step includes forming the alloy layer by an aluminizing process in which the stator core is immersed into an aluminum bath.

13. The method for manufacturing a rotating electrical machine according to any one of claims 8 to 12, further comprising a step of assembling a plurality of segment conductors into slots of the stator core to which the second metal material is joined, and coupling the plurality of assembled segment conductors.
